(19) Europäisches Patentamt
European Patent Office
Office européen des brevets

(11) Veröffentlichungsnummer : **0 093 962**
**B1**

(12) # EUROPÄISCHE PATENTSCHRIFT

(45) Veröffentlichungstag der Patentschrift : **16.06.87**

(51) Int. Cl.⁴ : **C 07 C125/065**, A 01 N 47/12

(21) Anmeldenummer : **83104151.2**

(22) Anmeldetag : **28.04.83**

(54) **2-(3-Iod-2-propinyloxy)-ethanol-carbamate, ihre Herstellung und ihre Verwendung als antimikrobielle Substanzen.**

(30) Priorität : **06.05.82 DE 3216895**

(43) Veröffentlichungstag der Anmeldung : **16.11.83 Patentblatt 83/46**

(45) Bekanntmachung des Hinweises auf die Patenterteilung : **16.06.87 Patentblatt 87/25**

(84) Benannte Vertragsstaaten : **AT BE CH DE FR GB IT LI LU NL SE**

(56) Entgegenhaltungen :
**EP-A- 0 014 032**
**CHEMICAL ABSTRACTS, Band 83, Nr. 13, 29. September 1975, Seite 492, Nr. 113679k, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Gerhadt, Werner, Dr.**
**Noldeweg 10**
**D-4010 Hilden (DE)**
Erfinder : **Lehmann, Rudolf, Dr.**
**Schnugsheide 18**
**D-5653 Leichlingen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Aus Chemical Abstracts, Band 83, Seite 492, Nr. 113 679k sind Verbindungen der Formel $IC{\equiv}CCH_2O(CH_2CH_2O)_nH$ (A) mit $\geqslant$ 1 als Ausgangsmaterialien für die Herstellung von antibakteriell wirksamen Verbindungen der Formel $I_2C{=}ClCH_2O(CH_2CH_2O)_nH$ beschrieben. Über eine antimikrobielle Aktivität der Verbindungen (A) enthält das Referat keinerlei Angaben.

Die EP-A-0 014 032 beschreibt antimikrobiell wirksame Verbindungen der Formel $[IC{=}C{-}(CH_2)_n{-}O{-}CONH]_mR$, in der R eine substituierte oder unsubstituierte Alkyl-, Aryl- oder Alkylarylgruppe mit 1 bis 20 Kohlenstoffatomen darstellt, die dem Index m entsprechend 1 bis 3 Bindungen aufweisen kann, während m und n ganze Zahlen von 1 bis 3 darstellen.

Die Erfindung betrifft 2-(3-Iod-2-propinyloxy)ethanol-carbamate der allgemeinen Formel (I)

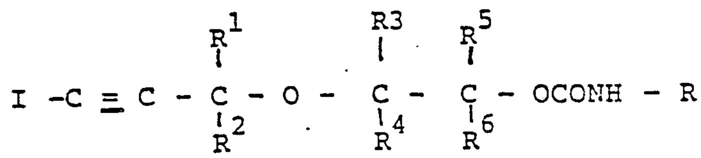
(I)

in der $R^1$ und $R^2$ gleich oder verschieden sind und Wasserstoff, lineare oder verzweigte Alkylreste mit 1 bis 6 Kohlenstoffatomen bedeuten, $R^3$, $R^4$, $R^5$ und $R^6$, die gleich oder verschieden sein können, Wasserstoff oder Alkylreste mit 1 bis 4 Kohlenstoffatomen bedeuten und R Wasserstoff, lineare oder verzweigte Alkylreste mit 1 bis 12 Kohlenstoffatomen oder einen Cyclohexylrest, einen Phenylrest, einen substituierten Phenylrest, einen Benzylrest oder einen p-Toluolsulfonylrest bedeutet.

Die Erfindung betrifft weiterhin ein Verfahren zur Herstellung der 2-(3-Iod-2-propinyloxy)-ethanol-carbamate der allgemeinen Formel (I), bei dem man äquimolare Mengen der Alkohole der allgemeinen Formel (II)

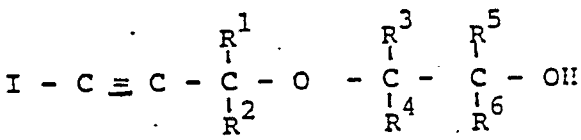
(II)

mit geeigneten Isocyanaten der allgemeinen Formel (III)

$$OCN{-}R \qquad (III)$$

wobei in den Formeln die Symbole $R^1$, $R^2$, $R^3$, $R^4$, $R^5$ und $R^6$ und R die für die Formel (I) angegebenen Bedeutungen haben, umsetzt.

Die Erfindung betrifft schließlich die Verwendung der Verbindungen der Formel (I) als antimikrobielle Substanzen.

Beispiele für lineare oder verzweigte Alkylreste mit 1 bis 6 Kohlenstoffatomen, für die $R^1$ und $R^2$ stehen, sind Methyl, Ethyl, Propyl, Isopropyl, n-Butyl, Isobutyl, sec.-Butyl, tert.-Butyl, Pentyl, Hexyl und deren verzweigte Isomere. Bevorzugt werden Verbindungen der Formel I in denen beide Substituenten $R^1$ und $R^2$ gleichzeitig Wasserstoff oder gleichzeitig Methyl sind, sowie solche, in denen von $R^1$ und $R^2$ ein Substituent Wasserstoff ist, während der andere Methyl darstellt.

Beispiele für Alkylreste mit 1 bis 4 Kohlenstoffatomen, für die $R^3$, $R^4$, $R^5$ und $R^6$ stehen, sind Methyl, Ethyl, Propyl, Isopropyl, n-Butyl, Isobutyl, sec.-Butyl und tert.-Butyl, wobei Methyl bevorzugt wird.

Bevorzugt sind Verbindungen der allgemeinen Formel I, in denen von den Resten $R^1$ bis $R^6$ mindestens 4 Reste Wasserstoff bedeuten.

Beispiele für lineare und verzweigte Alkylreste mit 1 bis 12 Kohlenstoffatomen, für die R steht, sind Methyl, Ethyl, Propyl, Isopropyl, n-Butyl, Isobutyl, sec.-Butyl, tert.-Butyl, Pentyl, Hexyl, Heptyl, Octyl, Nonyl, Decyl, Undecyl, Dodecyl sowie die verzweigten Isomeren der Alkyle mit 5 bis 12 Kohlenstoffatomen.

Beispiele für substituierte Phenylreste, für die R steht, sind Chlorphenyl, Bromphenyl, Fluorphenyl, Dichlorphenyl und Trichlorphenyl.

Bevorzugt werden Verbindungen, in denen R ein niederer Alkylrest mit 1 bis 4 Kohlenstoffatomen, sowie ein Phenylrest oder mit Chlor oder Brom substituierter Phenylrest ist.

Beispiele für besonders bevorzugte Verbindungen sind solche, in denen R Propyl, Butyl oder Phenyl ist.

Die N-substituierten 2-(3-Iod-2-propinyloxy)-ethanol-carbamate der allgemeinen Formel (I) werden nach an sich bekannten Verfahren (Houben-Weyl, Methoden der Org. Chemie, Bd. 8, S. 141-144 (1952)) durch Umsetzung äquimolarer Mengen der Alkohole der allgemeinen Formel (II) mit geeigneten, z. B. im Handel erhältlichen Isocyanaten der allgemeinen Formel (III) synthetisiert.

Die Umsetzung wird bei Temperaturen von 10 bis 70 °C, vorzugsweise von 20 bis 30 °C durchgeführt.

Die Reaktionen werden im allgemeinen in einem inerten Lösungsmittel durchgeführt. Als Beispiele seien Ethylenchlorid, Dimethylformamid, Toluol, Chlorbenzol, Methylenchlorid und Tetrahydrofuran genannt.

Die Reaktionen können mit Hilfe von Katalysatoren beschleunigt werden. Als geeignet haben sich Katalysatoren wie Dibutylzinndilaurat erwiesen. Weitere verwendbare Katalysatoren sind : Dibutylzinndiacetat und tert. Basen wie Triethylamin.

Die Alkohole der allgemeinen Formel (II) können nach an sich bekannten Verfahren in zwei Reaktionsstufen durch Umsetzung von Propargylalkohol oder substituierten Propargylalkoholen mit Ethylenoxid oder substituierten Epoxiden und nachfolgende Iodierung der erhaltenen Propinyloxy-Alkohole hergestellt werden. Ein Teil der Alkohole der allgemeinen Formel (II) sind neue Verbindungen, die Gegenstand einer parallelen Patentanmeldung vom gleichen Tage sind.

Beispiele der Alkohole der allgemeinen Formel (II) sind :

2-(3-Iod-2-propinyloxy)-ethanol,
2-(4-Iod-3-butin-2-yloxy)-ethanol,
1-(3-Iod-2-propinyloxy)-2-propanol und
1-(2-Hydroxyethoxy)-1-iodethinyl-cyclohexan.

Beispiele für Isocyanate sind Methylisocyanat, Ethylisocyanat, Propylisocyanat, Butylisocyanat, Phenylisocyanat, 4-Chlorphenylisocyanat, Cyclohexylisocyanat, 4-Fluorphenylisocyanat, 3,4-Dichlorphenylisocyanat, 2,4,5-Trichlorphenylisocyanat und p-Toluolsulfonylisocyanat.

Die erfindungsgemässen Verbindungen eignen sich aufgrund ihrer mikrobistatischen und mikrobiziden Wirkung beispielsweise für die Konservierung technischer Produkte (z. B. Anstrichmittel, Leime, Dispersionen, Kühlschmiermittel), zur antimikrobiellen Ausrüstung von Fugendichtmassen (z. B. Silicondichtmassen), zur Bekämpfung von Schimmelpilzen (wie z. B. Schimmel an feuchten Wänden, Decken oder Fußböden), zum Schützen von Holz sowie zur antimikrobiellen Ausrüstung von Kunststoffen wie z. B. Polyvinylchlorid (PVC)-Folien.

Die erfindungsgemässen Verbindungen können auch zum Desinfizieren verwendet werden. Ferner sind sie geeignet als Konservierungsmittel für Kosmetika.

Zur Verwendung in antimikrobiellen Mitteln können die erfindungsgemässen Verbindungen in bekannter Weise in flüssige, pastenförmige oder feste Zubereitungen, die als Lösungen, Suspensionen oder Emulsionen vorliegen, eingearbeitet werden.

Die Erfindung wird in den folgenden Beispielen erläutert, wobei die Erfindung jedoch nicht auf die Beispiele beschränkt ist.

## Beispiel 1

2-(3-Iod-2-propinyloxy)-ethanol-N-methyl-carbamat (Verbindung A)

Zu einer Lösung von 3,3 g (0,058 Mol) Methylisocyanat und 12,8 g (0,057 Mol) 2-(3-Iod-2-propinyloxy)-ethanol in 50 ml Ethylenchlorid wurde unter Rühren 1 ml Dibutylzinndilaurat (Estabex L) als Katalysator gegeben. Infolge der exothermen Reaktion stieg die Temperatur allmählich von Raumtemperatur auf 30 °C an. Nach einer Reaktionszeit von 16 Stunden wurde das Lösungsmittel im Vakuum abdestilliert und das erhaltene gelbliche Öl zur Abtrennung des Katalysators mit n-Hexan extrahiert (Hexan-Phase wurde verworfen). Nach Entfernung von Lösungsmittelresten im Vakuum erhielt man 15,6 g (97 % der Theorie) 2-(3-Iod-2-propinyloxy)-ethanol-N-methyl-carbamat als klares, gelbliches Öl, das zu einem farblosen Feststoff durchkristallisierte (Schmelzp. 52 — 5 °C). Löslichkeit : leichtlöslich in Ethanol, Aceton, nahezu unlöslich in Wasser.

$C_7H_{10}INO_3$ (FG : 283,07)

Analyse (%)

berechnet : C 29,7 H 3,56 I 44,83

gefunden : C 29,90 H 3,60 I 43,8

IR (Film) : 2 185 (C≡C) 1 710 (s, O—CO—N) $cm^{-1}$ ; keine R—NCO-Bande.

$^1$H-NMR ($CDCl_3$) : δ = 2,8 (d, 3H, J = 2,5 Hz, $CH_3$) ; 3,6-4,4 (m, 4H, $OCH_2CH_2O$) ; 4,39 (s, 2H, $CH_2$) ; 4,7-5,2 (breit, NH).

## Beispiel 2

2-(3-Iod-2-propinyloxy)-ethanol-N-(4-chlorphenyl)-carbamat (Verbindung G)

Die in Beispiel 1 beschriebene Verfahrensweise wurde angewendet.

Ansatz :

4,6 g (0,03 Mol) 4-Chlorphenylisocyanat
6,8 g (0,03 Mol) 2-(3-Iod-2-propinyloxy)-ethanol

50 ml Ethylenchlorid
1 ml Dibutylzinndilaurat

Dabei wurde in einer Ausbeute von 10,8 g (95 % der Theorie) ein gelber Feststoff vom Schmelzp. 56-60 °C erhalten.

$C_{12}H_{11}ClINO_3$ (FG : 379,58)
Analyse (%)

| | | | | |
|---|---|---|---|---|
| berechnet : | C 37,97 | H 2,92 | N 3.69 | I 33,43 |
| gefunden : | C 38,3 | H 3,01 | N 3.49 | I 32,2 |

IR (KBr) : 2 180 (C≡C), 1 712 (s, OCON) $cm^{-1}$ ; keine R—CNO-Bande
$^1$H-NMR ($D_6$-DMSO) : δ = 3,4-4,3 (m, 4H, $OCH_2CH_2O$) ; 4,3 (s, 2H, $CH_2$) ; 7,16-7,58 (m, 4H, aromat. H)

## Beispiel 3

2-(3-Iod-2-propinyloxy)-ethanol-N-ethyl-carbamat (Verbindung B)

Die in Beispiel 1 beschriebene Verfahrensweise wurde angewandt.
Ansatz :
3,0 g (0,042 Mol) Ethylisocyanat
9,5 g (0,042 Mol) 2-(3-Iod-2-propinyloxy)-ethanol
50 ml Ethylenchlorid
1 ml Dibutylzinndilaurat

Dabei wurde in einer Ausbeute von 11,9 g (95 % der Theorie) ein hellgelbes Öl erhalten. $n_D^{20}$ = 1,528 2

$C_8H_{12}INO_3$ (FG : 297,09)
Analyse (%)

| | | | |
|---|---|---|---|
| berechnet : | C 32,34 | H 4,07 | I 42,71 |
| gefunden : | C 33,0 | H 4,17 | I 41,1 |

IR(Film) : 2 182 (C≡C), 1 702 (s, OCON) $cm^{-1}$ ; keine R—NCO-Bande
$^1$H-NMR ($CDCl_3$) : δ = 1,18 (t, 3H, J = 3,5 Hz, $CH_3$), 3,0-3,5 (m, 2H, J = 3,5 Hz und 1 Hz, $CH_2N$) ; 3,64-4,35 (m, 4H, $OCH_2CH_2O$) ; 4,35 (s, 2H, $CH_2O$) ; 4,6-5,2 (breit, NH).

Auf die in Beispiel 1 beschriebene Verfahrensweise wurden weitere Verbindungen hergestellt, die in den folgenden Tabellen I und Ia aufgeführt sind. Die gemäss Beispielen 1 bis 3 erhaltenen Verbindungen sind in Tabelle I unter den Bezeichnungen A, G und B enthalten.

## Tabelle I

Verbindungen der Formel (I), in der $R^1 = R^2 = R^3 = R^4 = R^5 = R^6 = H$ ; I—C≡$CCH_2OCH_2$—$CH_2O$-CONH—R

| Verbindung | R | Schmp. (°C) oder $n_D^{20}$ | Ausbeute (%) |
|---|---|---|---|
| A | $CH_3$ | 52 -55 | 97 |
| B | $-CH_2CH_3$ | 1,5282 | 95 |
| C | $-(CH_2)_3CH_3$ | 1,5183 | 98 |
| D | $-C(CH_3)_3$ | 1,5132 | 89 |
| E | 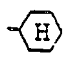 | 86 - 88 | 75 |
| F | 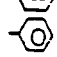 | 101 - 104 | 82 |
| G | 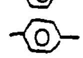 Cl | 56 - 60 | 95 |
| H | $-SO_2$ 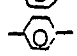 $CH_3$ | hellgelbes, hochviskoses Harz | 92 |

Tabelle I (Fortsetzung)

| Verbindung | R | Schmp. (°C) oder $n_D^{20}$ | Ausbeute (%) |
|---|---|---|---|
| I | 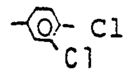 | 75 - 77 | 95 |
| J | 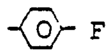 | 67 - 69 | 94 |
| K | 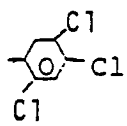 | 112 - 115 | 55 |
| L | H | 74 - 76 | 82 |

Tabelle Ia

Verbindungen der Formel (I), in der R = $CH_3$, $R^4$ = $R^6$ = H und $R^1$, $R^2$, $R^3$ und $R^5$ die angegebenen Bedeutungen haben ;

$$\begin{array}{l} \quad R^1 \quad R^3 \quad R^5 \\ I-C\equiv CC - OCH - CHOCONHCH_3 \\ \quad R^2 \end{array}$$

| Verbindung | $R^1$ | $R^2$ | $R^3$ | $R^5$ | Schmp. (°C) oder $n_D^{20}$ | Ausbeute (%) |
|---|---|---|---|---|---|---|
| M | H | H | $CH_3$ | $CH_3$ | 1,5202 | 100 |
| N | $CH_3$ | H | H | H | 1,5112 bei 50°C | 100 |
| O | $CH_3$ | $CH_3$ | H | H | 79 - | 82 |
| P | $CH_3$ | H | $CH_3$ | $CH_3$ | 1,4910 bei 50°C | 83 |

Antimikrobielle Wirksamkeit der Verbindungen der allgemeinen Formel (I)

Die mikrobistatische Wirksamkeit der Verbindungen A bis P wurde gegenüber folgenden Testkeimsuspensionen bestimmt :

| | |
|---|---|
| 1. Staphylococcus aureus | $2 \times 10^9$ Keime/ml |
| 2. Escherichia coli | $2 \times 10^9$ Keime/ml |
| 3. Pseudomonas aeruginosa | $5 \times 10^8$ Keime/ml |
| 4. Candida albicans | $2 \times 10^8$ Keime/ml |
| 5. Aspergillus niger | $5 \times 10^7$ Keime/ml |
| 6. Penicillium camerunense | $5 \times 10^7$ Keime/ml |
| 7. Trichophyton mentagrophytes | $2 \times 10^7$ Keime/ml |
| 8. Penicillium funiculosum | $5 \times 10^7$ Keime/ml |

Die Hemmkonzentrationen der zu untersuchenden Verbindungen wurden mit Hilfe des Verdünnungstests nach den Richtlinien für die Prüfung chemischer Desinfektionsmittel der Deutschen Gesellschaft für Hygiene und Mikrobiologie (1972) ermittelt. Die Versuche wurden in sterilen Reagenzröhrchen ausgeführt. die Standard-I-Bouillon (pH 7,5 Merck) oder Würze-Bouillon (pH 5,5, Merck, 8° BG) enthielten. Nach Zugabe der Wirkstoffe betrug das Nährlösungsvolumen in den Röhrchen jeweils 10 ml. Anschließend wurden jeweils 0,1 ml der Testkeimsuspension der angegebenen Konzentration in die Röhrchen gebracht. Die mit Bakterien beimpften Nährlösungsproben wurden 3 Tage lang bei 37 °C im Brutschrank aufbewahrt. Die mit Pilzen beimpften Proben wurden 3 bis 4 Tage lang bei 30 °C bebrütet. Danach wurde festgestellt, welche dem Nährmedium zugeführte Wirkstoffkonzentration das Wachstum der Keime gerade noch gehemmt hatte. Der auf diese Weise gefundene Wert wurde als Hemmkonzentration bezeichnet. Folgende Wirkstoffkonzentrationen in ppm wurden getestet : 1 000, 500, 250, 100, 50, 10, bei Pilzen teilweise zusätzlich 25, 10, 5, 2,5 und 1.

Für die Verbindungen A bis P wurden die in der nachstehenden Tabelle II aufgeführten Hemmkonzentrationen ermittelt :

Tabelle II

Flüssige Hemmreihe zum Nachweis der mikrobistatischen Wirkung (X = > 1 000 ppm)

| Verbindung | Testkeim 1 | 2 | 3 | 4 | 5 | 6 | 7 | 8 |
|---|---|---|---|---|---|---|---|---|
| A | 500 | 500 | 500 | 25 | 5 | 50 | 5 | 10 |
| B | 500 | 1000 | 1000 | 25 | 2,5 | 50 | 2,5 | 10 |
| C | 250 | X | 1000 | 25 | 2,5 | 50 | 2,5 | 10 |
| D | 1000 | X | X | 50 | ≤10 | 50 | 10 | 50 |
| E | X | X | X | 25 | 10 | 50 | 5 | 50 |
| F | X | X | X | 25 | 2,5 | 10 | 1 | 10 |
| G | 50 | 500 | X | ≤10 | 2,5 | 5 | 10 | 10 |
| H | 500 | X | 1000 | 250 | 50 | 100 | | |
| I | ≤10 | X | X | 50 | ≤10 | ≤10 | | |
| J | 50 | X | X | 50 | ≤10 | ≤10 | | |
| K | X | X | X | 500 | 100 | 100 | | |
| L | 500 | 250 | 1000 | 50 | ≤10 | 50 | | |
| M | 100 | 1000 | X | 100 | ≤10 | 50 | | |
| N | 500 | 500 | X | 100 | ≤10 | 50 | | |
| O | 500 | 1000 | X | 250 | 100 | 50 | | |
| P | X | 500 | X | 250 | 250 | 50 | | |

Die mikrobizide Wirkung der Verbindungen A bis P wurde gegenüber folgenden Testkeimsuspensionen bestimmt :

1. Aspergillus niger — $5 \times 10^7$ Keime/ml
2. Penicillium camerunense — $5 \times 10^7$ Keime/ml

Die Abtötungszeiten der zu untersuchenden Produkte wurden mit Hilfe des Suspensionstests nach den Richtlinien für die Prüfung chemischer Desinfektionsmittel der Deutschen Gesellschaft für Hygiene und Mikrobiologie (1972) ermittelt. Die zu prüfenden Substanzen wurden zunächst in wenig Alkohol gelöst. Aus den ethanolischen Lösungen wurde durch Verdünnen mit Hartwasser einer Härte von 17° dH Testlösungen hergestellt, die 3 000 ppm und 500 ppm Wirkstoff und maximal 1 Gew.-% Ethanol enthielten. Es wurden bei Raumtemperatur jeweils 0,1 ml der Testkeimsuspension in Reagenzgläser pipettiert. Hierzu wurden jeweils 10 ml der oben beschriebenen Testlösung gegeben. Nach Einwirkungszeiten von 15, 60 und 120 Minuten bei Raumtemperatur wurde den Reagenzgläsern mit Hilfe einer Öse ein Tropfen Material entnommen und in 10 ml Nährlösung, die 3 % Tween 80 und 0,3 % Lecithin als Enthemmer enthielt, überimpft. Das Nährmedium bestand aus 1 Gew.-%iger Standard-I-Bouillion (Merck). Die Proben wurden bei 30 °C bebrütet. Nach frühestens 5 Tagen wurden die Kulturen makroskopisch auf Wachstum beurteilt und auf diesem Weg die Abtötungszeiten ermittelt, die in der nachstehenden Tabelle III angegeben sind.

Tabelle III

Mikrobizide Wirkung im Suspensionstest (X = > 120 min)

| Verbindung | Abtötkonz. (ppm) | Testkeim 1 | Testkeim 2 | pH |
|---|---|---|---|---|
| A | 3000 | ≤15 | ≤15 | 4,3 |
| | 500 | 120 | ≤15 | |
| B | 3000 | ≤15 | ≤15 | 4,1 |
| | 500 | 120 | 60 | |
| C | 3000 | ≤15 | 60 | 3,9 |
| | 500 | 120 | X | |
| D | 3000 | ≤15 | ≤15 | 4,0 |
| | 500 | 120 | ≤15 | |
| E | 3000 | X | X | 5.3 |
| | 500 | X | X | |
| F | 3000 | 120 | X | 5.5 |
| | 500 | X | X | |
| G | 3000 | ≤15 | ≤15 | 7,1 |
| | 500 | X | X | |
| H | 3000 | X | ≤15 | 3,3 |
| | 500 | - | 60 | |
| I | 3000 | X | X | 5,3 |
| J | 3000 | 60 | X | 7,1 |
| | 500 | 120 | X | |
| K | 3000 | 60 | 60 | 7,7 |
| | 500 | X | X | 7,4 |
| L | 3000 | ≤15 | ≤15 | 5,7 |
| | 500 | 60 | ≤15 | 6,2 |

Tabelle III (Fortsetzung)

| Verbindung | Abtötkonz. (ppm) | Testkeim 1 | Testkeim 2 | pH |
|---|---|---|---|---|
| M | 3000 | X | ≤15 | 4,2 |
| | 500 | | X | 4,8 |
| N | 3000 | ≤15 | ≤15 | 4,5 |
| | 500 | X | X | 5,1 |
| O | 3000 | ≤15 | ≤15 | 4,5 |
| | 500 | 120 | 60 | 5,1 |
| P | 3000 | X | 120 | 4,6 |
| | 500 | X | X | 5,0 |

**Patentansprüche** (für die Vertragsstaaten : BE, CH, DE, FR, GB, IT, LI, LU, NL, SE)

1. 2-(3-Iod-2-propinyloxy)-ethanol-carbamate der allgemeinen Formel (I)

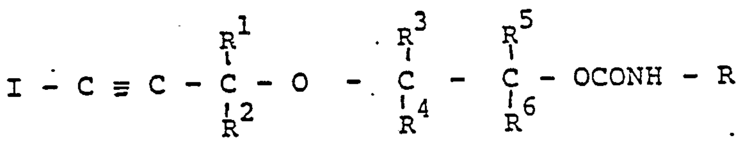

(I)

in der $R^1$ und $R^2$ gleich oder verschieden sind und Wasserstoff, lineare oder verzweigte Alkylreste mit 1 bis 6 Kohlenstoffatomen bedeuten, $R^3$, $R^4$, $R^5$ und $R^6$, die gleich oder verschieden sein können, Wasserstoff oder Alkylreste mit 1 bis 4 Kohlenstoffatomen bedeuten und R Wasserstoff, lineare oder verzweigte Alkylreste mit 1 bis 12 Kohlenstoffatomen oder einen Cyclohexylrest, einen Phenylrest, einen substituierten Phenylrest, einen Benzylrest oder einen p-Toluolsulfonylrest bedeutet.

2. Verfahren zur Herstellung von Verbindungen nach Anspruch 1, dadurch gekennzeichnet, daß man äquimolare Mengen der Alkohole der allgemeinen Formel (II)

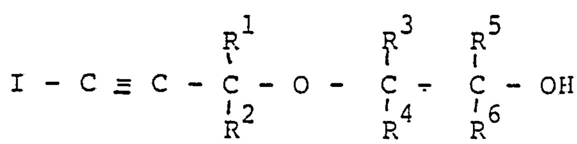

(II)

mit geeigneten Isocyanaten der allgemeinen Formel (III)

$$OCN{-}R \qquad (III)$$

wobei in den Formeln die Symbole $R^1$, $R^2$, $R^3$, $R^4$, $R^5$, $R^6$ und R die für die Formel (I) angegebenen Bedeutungen haben, umsetzt.

3. Antimikrobielle Mittel, enthaltend wenigstens eine Verbindung nach Anspruch 1 zusammen mit üblichen Formulierungsstoffen.

4. Verwendung der Verbindungen nach Anspruch 1 als antimikrobielle Substanzen.

**Patentansprüche** (für den Vertragsstaat AT)

1. Verfahren zur Herstellung von 2-(3-Iod-2-propinyloxy)-ethanol-carbamaten der allgemeinen Formel (I)

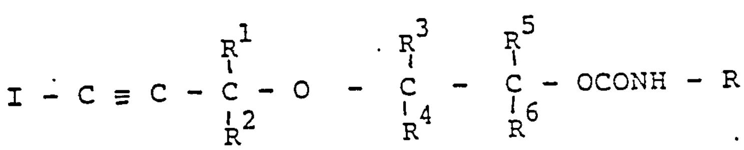

(I)

in der $R^1$ und $R^2$ gleich oder verschieden sind und Wasserstoff, lineare oder verzweigte Alkylreste mit 1 bis 6 Kohlenstoffatomen bedeuten, $R^3$, $R^4$, $R^5$ und $R^6$, die gleich oder verschieden sein können, Wasserstoff oder Alkylreste mit 1 bis 4 Kohlenstoffatomen bedeuten und R Wasserstoff, lineare oder verzweigte Alkylreste mit 1 bis 12 Kohlenstoffatomen oder einen Cyclohexylrest, einen Phenylrest, einen substituierten Phenylrest, einen Benzylrest oder einen p-Toluolsulfonylrest bedeutet, dadurch gekennzeichnet, daß man äquimolare Mengen der Alkohole der allgemeinen Formel (II)

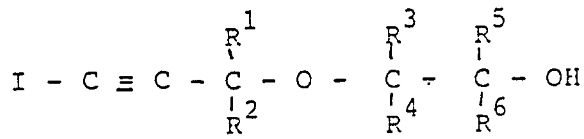

(II)

mit geeigneten Isocyanaten der allgemeinen Formel (III)

OCN—R (III)

wobei in den Formeln die Symbole $R^1$, $R^2$, $R^3$, $R^4$, $R^5$, $R^6$ und R die für die Formel (I) angegebenen Bedeutungen haben umsetzt.

2. Antimikrobielle Mittel, enthaltend wenigstens eine Verbindung der Formel I in Anspruch 1 zusammen mit üblichen Formulierungsstoffen.

3. Verwendung der Verbindungen der Formel I in Anspruch 1 als antimikrobielle Substanzen.

**Claims** (for the Contracting States : BE, CH, DE, FR, GB, IT, LI, LU, NL, SE)

1. 2-(3-iodo-2-propynyloxy)-ethanol carbamates corresponding to the following general formula

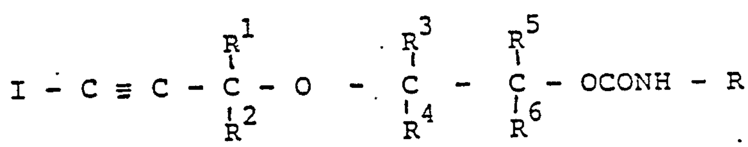

(I)

in which $R^1$ and $R^2$ may be the same or different and represent hydrogen, linear or branched $C_1$-$C_6$ alkyl radicals, $R^3$, $R^4$, $R^5$ and $R^6$ may be the same or different and represent hydrogen or $C_1$-$C_4$ alkyl radicals and R represents hydrogen, linear or branched $C_1$-$C_{12}$ alkyl radicals or a cyclohexyl radical, a phenyl radical, a substituted phenyl radical, a benzyl radical or a p-toluenesulfonyl radical.

2. A process for the preparation of the compounds claimed in Claim 1, characterized in that equimolar quantities of alcohols corresponding to the following general formula

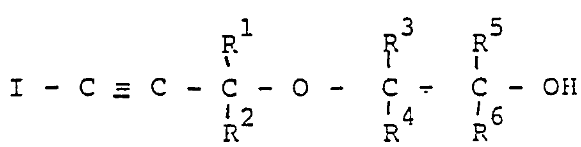

(II)

are reacted with suitable isocyanates corresponding to the following general formula

OCN—R (III)

in which formulae $R^1$, $R^2$, $R^3$, $R^4$, $R^5$, $R^6$ and R are as defined for formula (I).

3. Antimicrobial preparations containing at least one compound according to Claim 1 together with standard formulation ingredients.

4. The use of the compounds according to Claim 1 as antimicrobial agents.

**Claims** (for the Contracting State AT)

1. A process for the production of 2-(3-iodo-2-propynyloxy)-ethanol carbamates corresponding to the following general

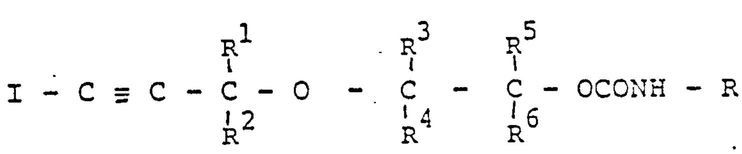

(I)

in which $R^1$ and $R^2$ may be the same or different and represent hydrogen, linear or branched $C_1$-$C_6$ alkyl radicals, $R^3$, $R^4$, $R^5$ and $R^6$ may be the same or different and represent hydrogen or $C_1$-$C_4$ alkyl radicals and R represents hydrogen, linear or branched $C_1$-$C_{12}$ alkyl radicals or a cyclohexyl radical, a phenyl radical, a substituted phenyl radical, a benzyl radical or a p-toluenesulfonyl radical, characterized in that equimolar quantities of alcohols corresponding to the following general formula

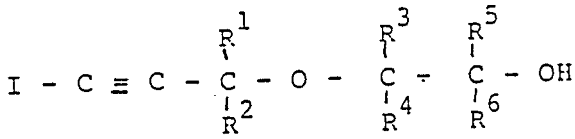

(II)

are reacted with suitable isocyanates corresponding to the following general formula

OCN—R (III)

in which formulae the symbols $R^1$, $R^2$, $R^3$, $R^4$, $R^5$, $R^6$ and R are as defined for formula (I).

2. Antimicrobial preparations containing at least one compound according to formula I in Claim 1 together with standard formulation ingredients.

3. The use of the compounds corresponding to formula I in Claim 1 as antimicrobial agents.

**Revendications** (pour les Etats contractants : BE, CH, DE, FR, GB, IT, LI, LU, NL, SE)

1. 2-(3-iodo-2-propinyloxy)-éthanolcarbamates de formule générale (I)

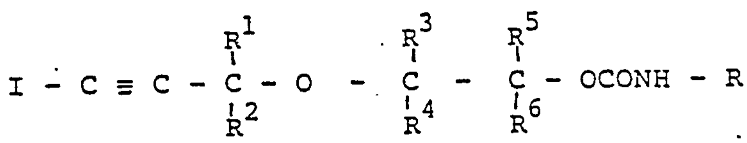

(I)

dans laquelle $R^1$ et $R^2$ sont identiques ou différents et représentent des atomes d'hydrogène, des radicaux alkyle linéaires ou ramifiés ayant de 1 à 6 atomes de carbone ; $R^3$, $R^4$, $R^5$ et $R^6$ qui peuvent être identiques ou différents, représentent des atomes d'hydrogène ou des radicaux alkyle ayant de 1 à 4 atomes de carbone ; et R représente un atome d'hydrogène, un radical alkyle linéaire ou ramifié ayant de 1 à 12 atomes de carbone ou un radical cyclohexyle, un radical phényle, un radical phényle substitué, un radical benzyle ou un radical p-toluènesulfonyle.

2. Procédé pour la préparation des composés selon la revendication 1, caractérisé en ce que l'on fait réagir des quantités équimolaires des alcools de formule générale (II)

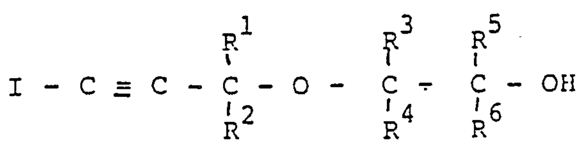

(II)

avec des isocyanates appropriés de formule générale (III)

OCN—R (III)

les symboles $R^1$, $R^2$, $R^3$, $R^4$, $R^5$, $R^6$ et R ayant dans les formules ci-dessus les significations données pour la formule (I).

3. Produits antimicrobiens contenant au moins un composé selon la revendication 1, conjointement avec des substances de formulation usuelles.

4. Utilisation des composés selon la revendication 1 en tant que substances antimicrobiennes.

**Revendications** (pour l'Etat contractant AT)

1. Procédé pour la préparation des 2-(3-iodo-2-propinyloxy)-éthanol-carbamates de formule générale (I)

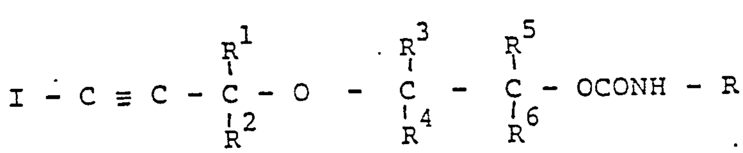

(I)

dans laquelle $R^1$ et $R^2$ sont identiques ou différents et représentent des atomes d'hydrogène, des radicaux alkyle linéaires ou ramifiés ayant de 1 à 6 atomes de carbone : $R^3$, $R^4$, $R^5$ et $R^6$ qui peuvent être identiques ou différents, représentent des atomes d'hydrogène ou des radicaux alkyle ayant de 1 à 4 atomes de carbone ; et R représente un atome d'hydrogène, un radical alkyle linéaire ou ramifié ayant de 1 à 12 atomes de carbone ou un radical cyclohexyle, un radical phényle, un radical phényle substitué, un radical benzyle ou un radical p-toluènesulfonyle, caractérisé en ce que l'on fait réagir des quantités équimolaires des alcools de formule générale (II)

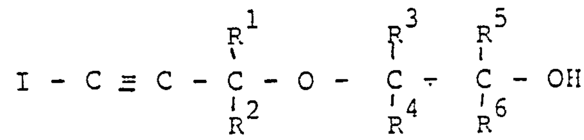

(II)

avec des isocyanates appropriés de formule générale (III)

$$OCN—R \qquad (III)$$

les symboles $R^1$, $R^2$, $R^3$, $R^4$, $R^5$, $R^6$ et R ayant dans les formules ci-dessus les significations données pour la formule (I).

2. Produits antimicrobiens contenant au moins un composé selon la revendication 1, conjointement avec des substances de formulation usuelles.

3. Utilisation des composés selon la revendication 1 en tant que substances antimicrobiennes.